# EUROPÄISCHE PATENTANMELDUNG

(11) **EP 4 482 024 A1**
(43) Veröffentlichungstag der Anmeldung: **25.12.2024**
(21) Anmeldenummer: 24178628.4
(22) Anmeldetag: 28.05.2024
(51) Int. Cl.: H02S 10/20

(54) **SOLARMODUL ZUR GEWINNUNG UND SPEICHERUNG VON ENERGIE**

(30) Priorität: 30.05.2023 DE 102023114176
(71) Anmelder: Kempka, Reinhold, 41468 Neuss (DE); Kempka, Patrick, 41468 Neuss (DE); Kempka, Benjamin, 41468 Neuss (DE)
(72) Erfinder: Kempka, Reinhold, 41468 Neuss (DE); Kempka, Patrick, 41468 Neuss (DE); Kempka, Benjamin, 41468 Neuss (DE)
(74) Vertreter: König Szynka Tilmann von Renesse Patentanwälte Partnerschaft mbB Düsseldorf

(57) **Zusammenfassung**

Die Erfindung betrifft ein Solarmodul zur Gewinnung und Speicherung von Energie, wobei das Solarmodul mindestens eine Solarzelle und einen Druckbehälter für Luft umfasst, wobei die mindestens eine Solarzelle auf dem Druckbehälter angeordnet ist, wobei der Druckbehälter ein Verbindungselement, bevorzugt einen Druckluftanschluss, besonders bevorzugt eine Druckluftschnellkupplung, umfasst. Fener betrifft die Erfindung ein System umfassend ein erfindungsgemäßes Solarmodul, einen Generator und mindestens einen Kompressor, sowie ein Verfahren zum Aufbau eines erfindungsgemäßen Systems und ein Verfahren zum Betreiben eines erfindungsgemäßen Systems.

## Beschreibung

Die Erfindung betrifft ein Solarmodul zur Gewinnung und Speicherung von Energie, ein System umfassend ein erfindungsgemäßes Solarmoduls, einen Generator und mindestens einen Kompressor, ein Verfahren zum Aufbau eines erfindungsgemäßen Systems und ein Verfahren zum Betreiben eines erfindungsgemäßen Systems.

Solarmodule zur Gewinnung und Speicherung von Energie werden vermehrt zum Schutz der Umwelt eingesetzt. Mittels der Solarmodule wird erneuerbare Energien aus Sonnenlicht gewonnen. Hierzu weisen die Solarmodule mindestens eine Solarzelle auf, die Sonnenlicht in elektrische Energie umwandelt. Die Solarmodule können dabei an den verschiedensten Stellen aufgestellt werden wie z.B. Dächern, Freiflächen, Wänden oder auf Wasser.

Damit ein möglichst hoher Wirkungsgrad erreicht wird, muss die mindestens eine Solarzelle gekippt aufgestellt werden. So kann der Wirkungsgrad bei einer Ost-West Anlage erhöht werden, wenn die mindestens eine Solarzelle in einem Winkel von zum Beispiel 10° zur Horizontalen ausgerichtet wird. Hierfür weisen die Solarmodule eine Gerüst auf. Die mindestens eine Solarzelle wird auf dem Gerüst angeordnet.

Der Aufbau des Gerüsts ist sehr aufwendig. Ferner ergibt sich durch das Gerüst ein Freiraum unterhalb der mindestens einen Solarzelle. In diesem Freiraum verfängt sich der Wind. Um zu verhindern, dass das Solarmodul durch den Wind umgeworfen und damit beschädigt wird, muss das Gerüst mit zusätzlichem Ballast beschwert werden. Hierdurch sind zusätzliche Arbeitsschritte und weiteres Material notwendig, wodurch die Kosten für den Aufbau der Solarmodule zunehmen.

Des Weiteren ergibt sich das Problem, dass mit den Solarmodulen die Stromproduktion vom Verlauf der Sonne bestimmt wird. Somit ist die Stromproduktion tagsüber und vor allem mittags meist größer als der Verbrauch von elektrischer Energie. Jedoch stehen morgens und abends nur geringe Mengen elektrischer Energie zur Verfügung, während nachts gar keine elektrische Energie erzeugt wird. Die tagsüber erzeugte überschüssige Energie kann für einen geringen Preis in das Stromnetzt eingespeist werden. Dies ist jedoch nicht rentabel.

Daher wird versucht die elektrische Energie, die tagsüber erzeugt wird, zu speichern. Zur Speicherung von Energie wird meistens ein Akkumulator eingesetzt. Um eine ausreichende Energiespeicherung zu gewährleisten, wird als Akkumulator häufig ein Lithium-Akkumulator genutzt. Jedoch ist der Lithium-Akkumulator sehr teuer. Ferner ist Lithium ein seltenes Material. Folglich können nur begrenzte Mengen von Lithium-Akkumulatoren hergestellt werden. Hierbei werden schon viele Lithium-Akkumulatoren insbesondere für mobile Geräte wie elektrische Autos oder Smartphones und Tablets benötigt. Somit steht für die stationären Lithium-Akkumulatoren nicht genug Lithium zur Verfügung. Darüber hinaus ist die Entsorgung von einem Lithium-Akkumulator aufwendig, teuer und umweltschädlich. Somit ist ein Lithium-Akkumulator teuer, schwer zu entsorgen und die Menge an vorhanden Lithium reicht nicht aus, um ausreichend stationäre Lithium-Akkumulatoren zur Speicherung von elektrischer Energie zu produzieren. Zudem weisen Lithium-Akkumulatoren das Risiko eines Zellenbrands auf. Daher müssen zum Aufstellen von Lithium-Akkumulatoren Brandschutzauflagen erfüllt werden.

Ausgehend hiervon liegt der Erfindung die Aufgabe zugrunde, ein einfaches und kostengünstiges Solarmodul bereitzustellen, das einfach auszubauen ist und umweltfreundlich, rentabel, sicher und effizient Energie gewinnen und speichern kann. Ferner ist es die Aufgabe der vorliegenden Erfindung ein System, ein Verfahren zum Aufbau eines erfindungsgemäßen Systems und ein Verfahren zum Betreiben eines erfindungsgemäßen Systems vorzuschlagen.

Gemäß einem ersten Aspekt der Erfindung wird die oben genannte Aufgabe mit einem Solarmodul zur Gewinnung und Speicherung von Energie gelöst, wobei das Solarmodul mindestens eine Solarzelle und einen Druckbehälter für Luft umfasst, wobei die mindestens eine Solarzelle auf dem Druckbehälter angeordnet ist, wobei der Druckbehälter ein Verbindungselement, bevorzugt einen Druckluftanschluss, besonders bevorzugt eine Druckluftschnellkupplung, umfasst.

Das Solarmodul ist eine vereinfachte Konstruktion, die den Aufbau des Solarmoduls erleichtert. Zudem ist unter der mindestens einen Solarzelle kein Freiraum, sodass der Wind das Solarmodul nicht umwerfen und somit nicht beschädigen kann, sodass das Solarmodul besonders sicher ist. Ferner kann die mit der mindestens einen Solarzelle gewonnene elektrische Energie als Druck in dem Druckbehälter gespeichert werden. Auf diese Weise kann die elektrische Energie einfach gespeichert werden, sodass das Solarmodul besonders rentabel ist. Ferner werden zur Speicherung der Energie keine Lithium-Akkumulatoren benötigt, sodass das Solarmodul besonders umweltfreundlich ist. Außerdem besteht bei den Solarmodulen keine Brandgefahr, sodass keine zusätzlichen Schutzmaßnahmen beispielsweise gegen einen Brand notwendig sind. Mithin ist das Solarmodul besonders einfach zu installieren sowie besonders sicher, effizient, rentabel und umweltfreundlich.

Das Solarmodul kann jegliche Form und Größe aufweisen. Hierzu kann die Größe des Solarmoduls der Größe einer Solarzelle oder einem ganzzahligen Vielfachen der Größe einer Solarzelle entsprechen. Ein ganzzahliges Vielfaches der Größe einer Solarzelle kann bedeuten, dass die Größe des Solarmoduls genau auf mehrere Solarzellen, beispielsweise 2, 3, 4, 5 oder mehr Solarzellen, angepasst sein kann. Das Solarmodul kann zur Installation auf einem Dach, an einer Wand, insbesondere einer Häuserfassade, auf einer Freifläche und/oder auf dem Wasser ausgebildet sein. Wenn das Solarmodul zur Installation auf dem Wasser ausgebildet sein kann, kann der Druckluftbehälter auf einfache Weise einen Schwimmkörper bereitstellen. Das Solarmodul kann für die Installation an der Wand, insbesondere der Häuserfassade, eine Befestigungsmittel aufweisen. Ein Befestigungsmittel kann beispielsweise ein Haken sein. Auf diese Weise wird die Installation erleichtert. Das Solarmodul kann in die Häuserfassade eingebunden werden beispielsweise als Bauelement.

Das Solarmodul kann eine rechteckige Grundform aufweisen. Auf diese Weise kann das Solarmodul besonders einfach und platzsparend mit anderen Solarmodulen aufgestellt werden. Das Solarmodul kann in einer vertikalen Ebene eine dreieckige Form haben. Somit kann die mindestens eine Solarzelle auf einfach Weise ausgerichtet werden und folglich kann die Effizienz des Solarmoduls erhöht werden.

Die mindestens eine Solarzelle kann ein elektrisches Bauelement sein. Die mindestens eine Solarzelle kann Strahlungsenergie, insbesondere Sonnenlicht, in elektrische Energie durch den photovoltaischen Effekt umwandeln. Die mindestens eine Solarzelle kann eine Größe von 1m x 2m aufweisen.

Der Druckbehälter kann ein geschlossene Behälter sein. Der Druckbehälter kann für einen Druck ausgebildet sein, der über dem Umgebungsdruck liegen kann. Der Druckbehälter kann insbesondere ein Druckluftbehälter sein.

Der Druckluftbehälter kann eine Ebene aufweisen, auf der die mindestens eine Solarzelle angeordnet sein kann. Die kleinste Seitenlängen der Ebene kann größer sein als die Höhe des Druckluftbehälters. Die Höhe des Druckluftbehälters kann die Erstreckung des Druckluftbehälters weg von der Ebene sein, auf der das Solarmodul angeordnet ist. Beispielsweise kann die kleinste Seitenlängen der Ebene mindestens zweimal so groß, bevorzugt mindestens fünfmal so groß, besonders bevorzugt mindestens zehnmal so groß wie die Höhe des Druckluftbehälters sein. Die kleinste Seitenlänge der Ebene kann zum Beispiel bei einem Rechteck die kürzeste Seite des Rechtecks sein. Die kleinste Seitenlänge der Ebene kann zum Beispiel bei einem Dreieck der kürzeste Schenkel des Dreiecks sein Die kleinste Seitenlänge der Ebene kann zum Beispiel bei einer Ellipse die kürzeste Verbindung von zwei Seiten der Ellipse durch den Mittelpunkt der Ellipse sein.

Auf diese Weise kann eine besonders große Fläche zur Energiegewinnung bereitgestellt werden, sodass das Solarmodul besonders rentabel und effizient Energie gewinnen kann. Zudem kann aufgrund der geringen Höhe das Solarmoduls einfach aufgebaut werden und es kann aufgrund der großen Fläche im Verhältnis zur Höhe besonders sicher sein. Somit kann das Solarmodul Energie umweltfreundlich, rentabel, sicher und effizient gewinnen und speichern.

Ferner kann der Druckbehälter eine im Verhältnis zur Höhe größere Unterseite aufweisen. Die Unterseite kann die Fläche sein, die zum Ablegen des Solarmoduls genutzt werden kann. Zum Beispiel kann die Unterseite die einem Dach zugewandte Seite des Solarmoduls sein. Beispielsweise kann die Unterseite die einer Wand zugewandte Seite des Solarmoduls sein. Die Unterseite kann der Ebene, auf der die mindestens eine Solarzelle angeordnet sein kann, gegenüberliegend angeordnet sein. Beispielsweise kann die kleinste Seitenlängen der Unterseite mindestens zweimal so groß, bevorzugt mindestens fünfmal so groß, besonders bevorzugt mindestens zehnmal so groß wie die Höhe des Druckluftbehälters sein. Die kleinste Seitenlänge der Unterseite kann zum Beispiel bei einem Rechteck die kürzeste Seite des Rechtecks sein. Die kleinste Seitenlänge der Unterseite kann zum Beispiel bei einem Dreieck der kürzeste Schenkel des Dreiecks sein Die kleinste Seitenlänge der Unterseite kann zum Beispiel bei einer Ellipse die kürzeste Verbindung von zwei Seiten der Ellipse durch den Mittelpunkt der Ellipse sein.

Auf diese Weise kann die Statik beispielsweise eines Daches aufgrund der großen Unterseite entlastet werden. Mithin kann das Solarmodul besonders sicher sein.

Das Solarmodul kann eine Druckkammer umfassen, wobei die Druckkammer in dem Druckbehälter angeordnet sein kann. Die Druckkammer kann vollständig von dem Druckbehälter umgeben sein. Die Druckkammer kann einen weiteren Druckluftanschluss, besonders bevorzugt eine weitere Druckluftschnellkupplung aufweisen. Der weitere Druckluftanschluss kann sich von der Druckluftkammer zur Außenseite des Druckbehälters erstrecken. Der weitere Druckluftanschluss kann derart ausgebildet sein, dass die Druckkammer über den weiteren Druckluftanschluss mit der Umgebung außerhalb des Druckbehälters fluidisch verbunden sein kann. Die Druckkammer kann einen mindestens zweimal, bevorzugt mindestens dreimal, besonders bevorzugt mindestens viermal so großen Druck aufnehmen können wie der Druckbehälter. Der Druckbehälter kann insbesondere für einen Druck von 2-3 bar ausgelegt sein. Die Druckkammer kann zum Beispiel für einen Druck von 7-9 bar ausgelegt sein.

Auf diese Weise kann das Solarmodul Energie bei zwei unterschiedlichen Drücken speichern und somit Energie besonders effizient und rentabel speichern. Zudem kann das Solarmodul besonders einfach aufgebaut werden, da die Druckkammer in dem Druckbehälter angeordnet sein kann.

Die mindestens eine Solarzelle kann derart auf dem Druckluftbehälter angeordnet sein, dass sich eine Solarzellenoberfläche und eine Druckluftbehälteroberfläche berühren. Die mindestens eine Solarzelle kann derart auf dem Druckluftbehälter angeordnet sein, dass eine Solarzellenoberfläche und eine Druckluftbehälteroberfläche aneinander anliegen.

Das Verbindungselement kann zum Verbinden von mehreren Solarmodulen ausgebildet sein. Das Verbindungselement kann als ein Anschluss für ein Verbindungsstück ausgebildet sein. Das Verbindungsstück kann zum Verbinden von mehreren Verbindungselementen ausgebildet sein.

Das Verbindungselement kann ein Druckluftanschluss sein. Auf diese Weise kann beispielsweise Druckluft besonders sicher in den Druckbehälter und aus dem Druckluftbehälter transportiert werden. Somit kann das Solarmodul besonders sicher sein.

Das Verbindungselement kann eine Druckluftschnellkupplung sein. Somit kann der Druckluftbehälter und mithin das Solarmodul besonders schnell angeschlossen werden. Dies erleichtert die Konstruktion, wodurch das Aufstellen des Solarmoduls kostengünstiger wird.

In einer Ausführungsform kann der Druckbehälter einen Kunststoff und/oder Aluminium umfassen oder der Druckbehälter kann aus Kunststoff und/oder Aluminium bestehen.

Auf diese Weise kann der Druckbehälter und somit das Solarmodul besonders leicht sein und damit besonders einfach zu transportieren und abzulegen sein. Somit wird die Konstruktion erleichtert.

Kunststoff kann den Vorteil bieten, dass der Druckbehälter und mithin das Solarmodul besonders einfach in seiner Form angepasst werden kann und besonders günstig hergestellt werden kann. Aluminium kann den Vorteil bieten, dass der Druckluftbehälter und damit auch das Solarmodul besonders gut recycelbar sein kann. Mithin kann das Solarmodul besonders umweltfreundlich sein.

Der Druckbehälter kann einen Verbundwerkstoff und/oder eine Aluminiumlegierung umfassen und/oder aus einem Verbundwerkstoff und/oder einer Aluminiumlegierungen bestehen.

In einer Ausführungsform kann die mindestens eine Solarzelle flexibel sein, wobei die mindestens eine Solarzelle insbesondere eine Solarfolie sein kann, wobei insbesondere die mindestens eine Solarzelle stoffschlüssig mit dem Druckluftbehälter verbunden sein kann.

Hierdurch kann der Zusammenbau des Solarmoduls erleichtert werden, sodass das Solarmodul günstiger werden kann. Ferner kann sich die mindestens eine flexible Solarzelle besonders gut an eine Formänderung des Druckbehälters aufgrund von einer Änderung des Drucks anpassen. Somit kann die Langlebigkeit und damit auch die Umweltfreundlichkeit des Solarmoduls gesteigert werden.

Die mindestens eine Solarzelle kann insbesondere eine Solarfolie sein. Solarfolien können besonders dünn und damit besonders leicht sein. Dadurch kann das Solarmodul besonders leicht sein und damit auch besonders einfach zu installieren sein. Durch den Verzicht auf Glas können Solarfolien mit einem deutlich reduzierten Energieaufwand hergestellt werden, wodurch die Fertigungskosten für das Solarmodul beträchtlich sinken können. Solarfolien können kein Glas aufweisen und eine Dicke von 300 µm bis 600 µm aufweisen.

Die mindestens eine Solarzelle kann stoffschlüssig mit dem Druckluftbehälter verbunden sein. Auf diese Weise kann die Verbindung zwischen der mindestens einen Solarzelle und dem Druckbehälter besonders langlebig sein. Zudem können die mindesten einen Solarzelle und der Druckbehälter ohne weitere Teile wie beispielsweise Schrauben oder Klemmen verbunden werden, sodass das Solarmodul besonders leicht sein kann. Die mindestens eine Solarzelle kann insbesondere auf dem Druckbehälter aufgeklebt sein. Dadurch kann die Fertigung besonders einfach sein, sodass das Solarmodul besonders günstig sein kann.

In einer Ausführungsform kann das Solarmodul eine Drucküberwachung umfassen, wobei die Drucküberwachung zum Überwachen des Drucks in dem Druckbehälter ausgebildet sein kann. Auf diese Weise kann das Solarmodul besonders effizient sein, da der Druck überwacht werden kann. Dadurch können die gespeicherte Energie oder noch freien Speicherkapazitäten des Solarmoduls bestimmt werden.

Die Drucküberwachung kann insbesondere ein Drucksensor bevorzugt mit einer Auswerteeinheit sein.

In einer Ausführungsform kann das Verbindungselement seitlich an dem Druckbehälter angeordnet sein. Auf diese Weise kann das Solarmodul auch mit dem Verbindungselement sicher und stabil aufgestellt werden. Gleichzeitig wird die Effizienz des Solarmoduls gesteigert, da die mindestens eine Solarzelle nicht verdeckt wird. Zudem kann das Solarmodul besonders gut verbindbar sein.

In einer Ausführungsform kann der Druckbehälter ein Kondensatventil umfassen, wobei insbesondere der Druckbehälter einen Sensor zum Messen von Kondensatwasser umfassen kann, wobei insbesondere der Sensor zum Aktivieren des Kondensatventil ausgebildet sein kann. Hierdurch kann das Kondensatwasser, das sich beim Befüllen und Entleeren in dem Druckbehälter sammeln kann, aus dem Druckbehälter entweichen. Somit kann die Langlebigkeit des Solarmoduls erhöht werden. Das Kondensatventil kann insbesondere an der Unterseite des Druckbehälters angeordnet sein. Auf diese Weise kann das Kondensatwasser besonders gut entfernt werden, sodass die Langlebigkeit des Solarmoduls weiter erhöht werden kann.

Das Kondensatventil kann ein Ventil sein, dass händisch und/oder elektrisch gesteuert betätigt werden kann. Mit dem Kondensatventil kann das Kondensatwasser durch den Druck im Druckbehälter entfernt werden.

Der Druckbehälter kann einen Sensor zum Messen von Kondensatwasser umfassen. Somit kann die Notwendigkeit einer Entfernung von Kondensatwasser bestimmt werden. Dadurch kann das Kondensatventil nur betätigt werden, wenn Kondensatwasser im Druckbehälter sein kann. Somit kann eine unnötige Betätigung des Kondensatventils unterbunden werden. Da bei jeder Betätigung des Kondensatventils auch Druck und somit Energie aus dem Druckbehälter entweichen kann, kann durch das Unterbinden von unnötigen Betätigungen des Kondensatventils Druck und somit Energie gespart werden. Somit kann das Solarmodul effizienter sein.

Der Sensor kann zum Aktivieren des Kondensatventils ausgebildet sein. Auf diese Weise kann das Kondensatventil automatisch betätigt werden. Damit kann das Kondensatventil sehr präzise gesteuert werden. Hierdurch kann die Langlebigkeit und auch die Effizienz des Solarmoduls erhöht werden.

Das Solarmodul kann eine, insbesondere automatische, Solarzellenreinigung umfassen. Die Solarzellenreinigung kann mindestens eine Düse zum Besprühen der mindestens einen Solarzelle beispielsweise mit Wasser aufweisen. Auf diese Weise kann die mindestens eine Solarzelle immer sauber sein und somit besonders viel Energie generieren. Folglich kann das Solarmodul effizienter sein. Beispielsweise kann die mindestens eine Düse zum Besprühen der mindestens einen Solarzelle fluidisch mit dem Kondensatventil verbunden sein. Hierdurch kann der Druck und das Kondensatwasser im Druckbehälter zur Reinigung der mindestens einen Solarzelle genutzt werden. Hierdurch kann das System zum einen autark und somit unabhängig von einer externen Wasserversorgung sein. Dies kann die Installation und den Betrieb des Solarmoduls erleichtern. Zum anderen kann die Reinigung mit dem vorhandenen Druck und Kondensatwasser erfolgen, sodass Ressourcen gespart werden können. Hierdurch kann das Solarmodul umweltfreundlicher und rentabler sein.

In einer Ausführungsform kann die mindestens eine Solarzelle einen Winkel von 3°-30°, bevorzugt von 5°-15°, zur Horizontalen aufweisen. Durch den Winkel kann die Effizienz der mindestens einen Solarzelle und damit auch des Solarmoduls erhöht werden.

In einer Ausführungsform kann das Solarmodul mindestens ein Aufstellelement umfassen, wobei das mindestens eine Aufstellelement an der Unterseite des Druckbehälters angeordnet sein kann, wobei insbesondere das mindestens eine Aufstellelement Bautenschutzmatte umfassen kann oder aus einer Bautenschutzmatte bestehen kann.

Hierdurch kann der Druckbehälter beabstandet vom Boden sein. Somit kann der Druckbehälter nicht mit Wasser oder anderen Materialien unterhalb des Druckbehälters in Kontakt kommen. So kann beispielsweise ein Rosten oder eine Reaktion des Druckbehälters mit den Materialien unterhalb des Druckbehälters verhindert werden. Dadurch wird die Langlebigkeit des Solarmoduls erhöht. Ferner kann beispielsweise bei einer Installation auf einem Dach Regenwasser unterhalb des Solarmoduls durchfliesen. Folglich kann der Druckbehälter nicht mit dem Regenwasser in Kontakt kommen, sodass das Regenwasser den Druckbehälter nicht schädigen kann. Dies erhöht die Langlebigkeit des Solarmoduls.

Das mindestens eine Aufstellelement kann ein Gerüst oder mindestens ein Fuß sein. Das mindestens eine Aufstellelement kann insbesondere eine quadratisch oder runde Aufstellfläche haben. Dadurch kann beispielsweise Regen besonders gut unter dem Solarmodul abfließen, sodass die Langlebigkeit des Solarmoduls erhöht wird.

Das mindestens eine Aufstellelement kann eine Bautenschutzmatte umfassen oder aus einer Bautenschutzmatte bestehen. Auf diese Weise kann das Solarmodul besonders günstig sein. Ferner kann das Solarmoduls besonders einfach zu installieren sein, da das Solarmodul die Aufstellfläche wie zum Beispiel ein Dach aufgrund der Bautenschuztmatte nicht schädigen kann.

Gemäß einem zweiten Aspekt der Erfindung wird die oben genannte Aufgabe mit einem System umfassend ein erfindungsgemäßes Solarmodul, einen Generator und mindestens einen Kompressor gelöst, wobei der Druckbehälter mit dem mindestens einen Kompressor und dem Generator fluidisch verbunden ist, wobei der mindestens eine Kompressor zum Erhöhen des Drucks in dem Druckbehälter ausgebildet ist, wobei der Generator zum Umwandeln des Druck in dem Druckbehälter in Energie, insbesondere elektrische Energie, ausgebildet ist, wobei der Generator und/oder der mindestens eine Kompressor elektrisch mit der mindestens einen Solarzelle verbunden sind.

Das System stelle eine einfache Konstruktion zur Verfügung, die leicht aufzubauen ist. Zudem ist unter der mindestens einen Solarzelle kein Freiraum, sodass der Wind das Solarmodul nicht beschädigen kann, sodass das Solarmodul besonders sicher ist. Ferner kann die mit der mindestens einen Solarzelle gewonnene elektrische Energie als Druck in dem Druckbehälter gespeichert werden. Hierbei können der mindestens eine Kompressor und der mindestens eine Generator auf einfach und rentable Weise elektrische Energie in Druck und andersherum umwandeln. Auf diese Weise kann die elektrische Energie einfach gespeichert werden, sodass das System besonders rentabel ist. Ferner werden zur Speicherung der Energie keine Lithium-Akkumulatoren benötigt, sodass das System besonders umweltfreundlich ist. Ferner entfällt eine aufwendige Reparatur eines Lithium-Akkumulators, da das System und vor allem der mindestens eine Kompressor und der Generator einfach zu reparieren sind. Mithin ist das System besonders einfach zu installieren sowie besonders sicher, effizient, rentabel und umweltfreundlich.

Ferner werden mit dem System dieselben Vorteile erreicht wie mit dem erfindungsgemäßen Solarmodul.

Ein Generator kann eine elektrische Maschine sein, die Bewegungsenergie in elektrische Energie wandeln kann. Der Generator ist zum Umwandeln des Druck in dem Druckbehälter in Energie, insbesondere elektrische Energie, ausgebildet. Hierzu kann der Generator derart ausgebildet sein, dass der Generator den Druck in dem Druckbehälter in eine Rotation eines Rotors umwandeln kann, sodass, insbesondere elektrische, Energie erzeugt werden kann.

Der Generator kann derart ausgebildet sein, dass er mit einer definierten Rotation elektrische Energie erzeugen kann. Auf diese Weise kann der erzeugte Strom Gleichstrom und/oder Wechselstrom sein, der an die Frequenz des Stromnetztes angepasst werden kann. Dabei kann der Generator derart ausgebildet sein, dass er einen echten sinusförmigen Wechselstrom erzeugt. Dies kann den Vorteil gegenüber Solarzellen mit Wechselrichtern sein, die einen sinusförmigen Wechselstrom nur nachbilden können. Der Generator kann zum Erzeugen von Wechselstrom mit einer Frequenz von 40-60 Hertz, bevorzugt von 50 Hertz, ausgebildet sein. Das System kann ebenfalls mehrere Generatoren mit unterschiedlicher Leistung und unterschiedlicher Stromform umfassen. Der erzeugte Gleichstrom kann verlustarm und kostengünstig zum Beispiel zum Laden von Elektrofahrzeugen genutzt werden.

Der mindestens eine Kompressor kann eine Maschine sein, die einem eingeschlossenen Gas mechanische Arbeit zuführen kann. Der mindestens eine Kompressor kann zum Komprimieren von Gasen ausgebildet sein. Der mindestens eine Kompressor kann zum Erhöhen des Druck und/oder der Dichte des Gases ausgebildet sein. Der mindestens eine Kompressor kann zum Erhöhen des Drucks in dem Druckbehälter ausgebildet sein. Das Gas kann insbesondere Luft sein.

Fluidisch verbunden kann bedeuten, dass das Fluid, insbesondere das Gas und/oder eine Flüssigkeit, zielgerichtet fliesen kann. So kann das Fluid, insbesondere das Gas und/oder die Flüssigkeit, zwischen dem mindestens einen Kompressor, dem Generator und dem Druckbehälter fliesen. Bei der Verwendung mehrere Solarmodule in dem System kann das System entsprechend mehrere Druckbehälter aufweisen. Die mehreren Druckbehälter können miteinander und mit dem mindestens einen Kompressor und dem Generator fluidisch verbunden sein.

Der Generator und der mindestens eine Kompressor sind elektrisch mit der mindestens einen Solarzelle verbunden. Somit kann elektrische Energie zwischen dem Generator, dem mindestens einen Kompressor und der mindestens einen Solarzelle ausgetauscht werden.

Der Generator und der mindestens eine Kompressor können außerhalb des Solarmoduls angeordnet sein. Der Generator und der mindestens eine Kompressor können separate Bauteile des Systems sein. Auf diese Weise wird der Aufbau des Systems deutlich erleichtert.

In einer Ausführungsform kann der mindestens eine Kompressor und/oder der Generator in einer isolierten Kammer angeordnet sein.

Auf diese Weise können die Temperaturen, die beim Erhöhen des Drucks in dem Druckbehälter und/oder beim Umwandeln des Druck in dem Druckbehälter in Energie, insbesondere elektrische Energie, entstehen, ausgeglichen werden. So kann beim Erhöhen des Drucks in dem Druckbehälter Wärme entstehen, sodass die isolierte Kammer aufgeheizt werden kann. Beim Umwandeln des Druck in dem Druckbehälter in Energie, insbesondere elektrische Energie, kann der isolierten Kammer Wärme entzogen werden, sodass die isolierte Kammer abkühlen kann. Somit können mit dem mindestens einen Kompressor und dem Generator in der isolierten Kammer größere Temperaturschwankungen verhindert werden. Auf diese Weise kann das System effizienter sein.

In einer Ausführungsform kann das System mehrere Kompressoren umfassen, wobei die mehreren Kompressoren unterschiedliche Leistungen aufweisen können.

Auf diese Weise kann abhängig von der zur Verfügung stehenden Energie der Kompressor mit der optimalen Leistung angesteuert werden. Auf diese Weise kann das System besonders effizient sein.

In einer Ausführungsform kann das System mindestens einen Wechselrichter umfassen, wobei insbesondere der mindestens eine Wechselrichter mit mindestens vier Solarzellen verbunden sein kann.

Auf diese Weise kann die durch die mindestens eine Solarzelle gewonnen Energie effizient umgewandelt werden und beispielsweise sehr gut zum Erhöhen des Drucks in dem Druckbehälter durch den mindestens einen Kompressor genutzt werden.

In einer Ausführungsform kann das System mehrere Solarmodule umfassen, wobei die mehreren Druckbehälter, insbesondere über mindestens ein Verbindungsstück, miteinander fluidisch verbunden sein können, wobei die mehreren Solarzellen miteinander elektrisch verbunden sein können.

Auf diese Weise kann die Gesamtleistung des Systems erhöht werden, sodass das System besonders effizient sein kann. Durch die fluidisch Verbindung der Druckbehälter kann die Energiespeicherkapazität des System erhöht werden. Durch die elektrische Verbindung der mehreren Solarzellen kann die Energiemenge erhöht werden. Somit kann das System leistungsstärker werden.

Durch die fluidische Verbindung über das mindestens ein Verbindungsstück können die mehren Solarmodule besonders einfach zusammengebaut werden, sodass der Aufbau erleichtert werden kann. Dadurch können die Kosten für das System reduziert werden. Ferner kann das mindestens ein Verbindungsstück flexibel sein. Auf diese Weise kann der Aufbau nochmals erleichtert werden, sodass die Kosten für das System weiter reduziert werden können. Das mindestens eine Verbindungsstück kann ein Schlauch, insbesondre ein Druckluftschlauch, sein.

Gemäß einem dritten Aspekt der Erfindung wird die oben genannte Aufgabe mit einem Verfahren zum Aufbau eines erfindungsgemäßen Systems gelöst,
- bei dem das mindestens eine Solarmodul aufgestellt wird,
- bei dem der Druckbehälter mit dem mindestens einen Kompressor und dem mindestens einen Generator, insbesondere über mindestens ein Verbindungsstück, fluidisch verbunden wird,
- bei dem die mindestens eine Solarzelle mit dem mindestens einen Kompressor und dem Generator elektrisch verbunden wird.

Mit dem Verfahren wird das System leicht, schnell und einfach aufgebaut. Zudem ist unter der mindestens einen Solarzelle kein Freiraum, sodass der Wind das Solarmodul nicht beschädigen kann, sodass das Solarmodul besonders sicher ist. Ferner kann die mit der mindestens einen Solarzelle gewonnene elektrische Energie als Druck in dem Druckbehälter gespeichert werden. Hierbei kann der mindestens eine Kompressor und der mindestens eine Generator auf einfach und rentable Weise elektrische Energie in Druck und andersherum umwandeln. Auf diese Weise kann die elektrische Energie einfach gespeichert werden, sodass das Verfahren besonders rentabel ist. Ferner werden zur Speicherung der Energie keine Lithium-Akkumulatoren benötigt, sodass das Verfahren besonders umweltfreundlich ist. Ferner entfällt eine aufwendige Reparatur eines Lithium-Akkumulators, da das System und vor allem der mindestens eine Kompressor und der Generator einfach zu reparieren sind. Mithin ist das Verfahren besonders einfach sowie besonders sicher, effizient, rentabel und umweltfreundlich.

Ferner werden mit dem Verfahren dieselben Vorteile erreicht wie mit dem erfindungsgemäßen Solarmodul und dem erfindungsgemäßen System.

Gemäß einem vierten Aspekt der Erfindung wird die oben genannte Aufgabe mit einem Verfahren zum Betreiben eines erfindungsgemäßen Systems gelöst,
- bei dem mit der mindestens einen Solarzelle elektrische Energie erzeugt wird,
- bei dem die elektrische Energie, insbesondere nur die überschüssige elektrische Energie, dem mindestens einen Kompressor zugeführt wird,
- bei dem mit dem mindestens einen Kompressor der Druck in dem Druckbehälter erhöht wird, und
- bei dem vorzugsweise mit dem Generator der Druck in dem Druckbehälter in, insbesondere elektrische, Energie umgewandelt wird.

Mit dem Verfahren wird das System besonders rentabel genutzt. Zudem ist unter der mindestens einen Solarzelle kein Freiraum, sodass der Wind das Solarmodul nicht beschädigen kann, sodass das Solarmodul besonders sicher und langlebig ist. Dadurch kann mit dem Verfahren besonders viel Energie gewonnen und gespeichert werden, sodass das Verfahren besonders rentabel und effizient ist. Ferner kann die mit der mindestens einen Solarzelle gewonnene elektrische Energie als Druck in dem Druckbehälter gespeichert werden. Hierbei kann der mindestens eine Kompressor und der mindestens eine Generator auf einfach und rentable Weise elektrische Energie in Druck und andersherum umwandeln. Auf diese Weise kann die elektrische Energie einfach gespeichert werden, sodass das Verfahren besonders rentabel ist. Ferner werden zur Speicherung der Energie keine Lithium-Akkumulatoren benötigt, sodass das Verfahren besonders umweltfreundlich ist. Ferner entfällt eine aufwendige Reparatur eines Lithium-Akkumulators, da das System und vor allem der mindestens eine Kompressor und der Generator einfach zu reparieren sind. Mithin ist das Verfahren besonders einfach zu installieren sowie besonders sicher, effizient, rentabel und umweltfreundlich.

Ferner werden mit dem Verfahren dieselben Vorteile erreicht wie mit dem erfindungsgemäßen Solarmodul und dem erfindungsgemäßen System.

In einer Ausführungsform kann Energie nur gespeichert werden, wenn ein Energieüberschuss gemessen werden kann. Auf diese Weise kann das Verfahren besonders effizient sein.

In einer Ausführungsform kann der Druck in dem Druckbehälter mit mehrere Kompressoren mit unterschiedlichen Leistungen erhöht werden. Auf diese Weise kann abhängig von der zur Verfügung stehenden Energie der Kompressor mit der optimalen Leistung angesteuert werden. Auf diese Weise kann das Verfahren besonders effizient sein.

Die Erfindung wird nunmehr unter Bezugnahme auf die beiliegenden Zeichnungen ausführlich beschrieben.

Darin zeigen:
- Fig. 1: ein Solarmodul beispielsweise für ein Dach;
- Fig. 2: ein Solarmodul beispielsweise für eine Wand;
- Fig. 3: ein schwimmendes Solarmodul zum Einsatz auf dem Wasser;
- Fig. 4: ein erfindungsgemäßes System.

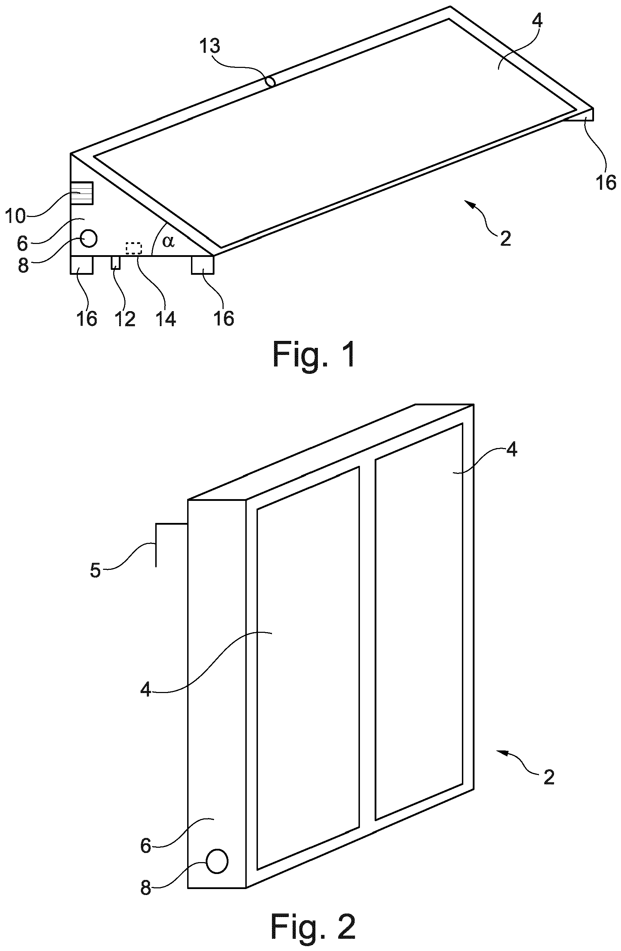

Fig. 1 zeigt ein Solarmodul 2 zur Gewinnung und Speicherung von Energie beispielsweise für ein Dach. Das Solarmodul 2 umfasst eine Solarzelle 4 und einen Druckbehälter 6 für Luft. Die Solarzelle 4 ist auf dem Druckbehälter 6 angeordnet, wobei der Druckbehälter 6 ein Verbindungselement 8, bevorzugt einen Druckluftanschluss 8, besonders bevorzugt eine Druckluftschnellkupplung 8, umfasst.

Der Druckbehälter 6 umfasst einen Kunststoff. Alternativ kann der Druckbehälter auch Aluminium und/oder Kunststoff umfassen oder der Druckbehälter 6 kann aus Kunststoff und/oder Aluminium bestehen.

Die Solarzelle 4 ist flexibel. Die Solarzelle 4 ist eine Solarfolie 4. Die Solarzelle 4 ist stoffschlüssig mit dem Druckluftbehälter 6 verbunden.

Das Solarmodul 2 umfasst eine Drucküberwachung 10, wobei die Drucküberwachung 10 zum Überwachen des Drucks in dem Druckbehälter 6 ausgebildet ist. Beispielsweise kann die Drucküberwachung ein Drucksensor bevorzugt mit einer Auswerteeinheit sein.

Das Verbindungselement 8 ist seitlich an dem Druckbehälter 6 angeordnet.

Der Druckbehälter 6 umfasst ein Kondensatventil 12. Der Druckbehälter 6 umfasst einen Sensor 14 zum Messen von Kondensatwasser, wobei der Sensor 14 zum Messen von Kondensatwasser zum Aktivieren des Kondensatventil 12 ausgebildet ist.

Das Solarmodul 2 umfasst eine automatische Solarzellenreinigung 13. Die Solarzellenreinigung 13 weist eine Düse 13 zum Besprühen der Solarzelle 4 mit Wasser auf. Die Düse 13 zum Besprühen der Solarzelle ist fluidisch mit dem Kondensatventil 12 verbunden. Hierzu kann die Düse 13 über einen nicht gezeigten Schlauch mit dem Kondensatventil 12 verbunden sein. Dadurch wird der Druck und das Kondensatwasser im Druckbehälter zur Reinigung der Solarzelle genutzt.

Die Solarzelle 4 weist einen Winkel α von 0°-20°, bevorzugt von 5°-15°, zur Horizontalen auf.

Das Solarmodul 2 umfasst vier Aufstellelemente 16. Die vier Aufstellelemente 16 sind an der Unterseite des Druckbehälters 6 angeordnet. Die vier Aufstellelemente 16 umfassen Bautenschutzmatte oder bestehen aus einer Bautenschutzmatte. Das Solarmodul 2 kann auch eine andere Anzahl an Aufstellelementen 16 umfassen.

Fig. 2 zeigt ein Solarmodul 2 beispielsweise für eine Wand. Das Solarmodul 2 zur Gewinnung und Speicherung von Energie umfasst zwei Solarzellen 4 und einen Druckbehälter 6 für Luft. Die Solarzellen 4 sind auf dem Druckbehälter 6 angeordnet, wobei der Druckbehälter 6 ein Verbindungselement 8, bevorzugt einen Druckluftanschluss 8, besonders bevorzugt eine Druckluftschnellkupplung 8, umfasst.

Ferner weist das Solarmodul 2 ein Befestigungsmittel 5 auf.

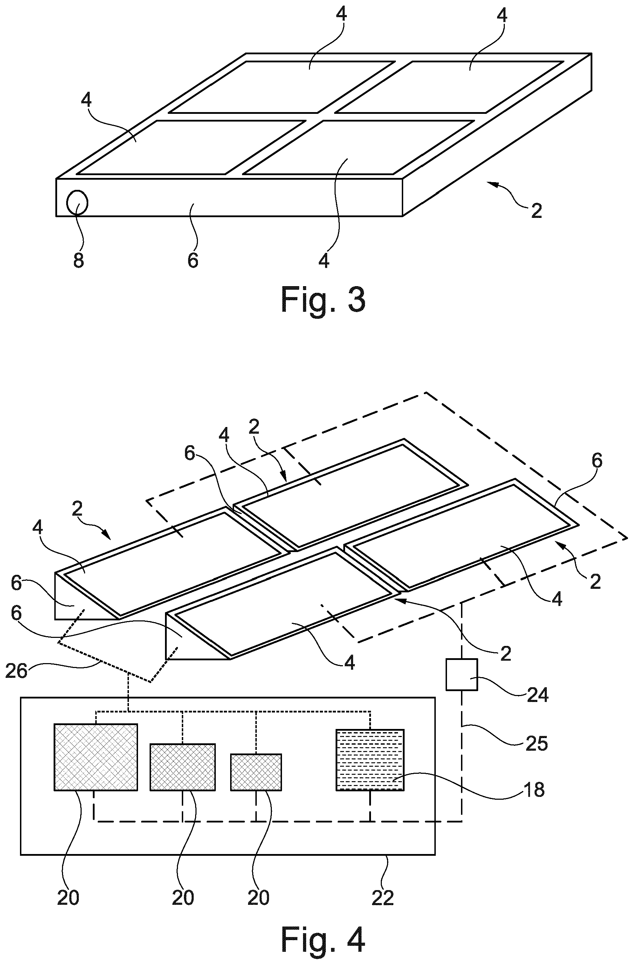

Fig. 3 zeigt ein schwimmendes Solarmodul 2 zum Einsatz auf dem Wasser. Das Solarmodul 2 zur Gewinnung und Speicherung von Energie umfasst vier Solarzellen 4 und einen Druckbehälter 6 für Luft. Die Solarzellen 4 sind auf dem Druckbehälter 6 angeordnet, wobei der Druckbehälter 6 ein Verbindungselement 8, bevorzugt einen Druckluftanschluss 8, besonders bevorzugt eine Druckluftschnellkupplung 8, umfasst. Der Druckbehälter 6 dient hierbei als Schwimmkörper.

Fig. 4 zeigt ein erfindungsgemäßes System. Das System umfasst vier Solarmodule 2, einen Generator 18 und drei Kompressoren 20. Die Druckbehälter 6 sind mit den drei Kompressoren 20 und dem Generator 18 fluidisch verbunden. Die drei Kompressoren 20 sind zum Erhöhen des Drucks in den Druckbehältern 6 ausgebildet. Der Generator 18 ist zum Umwandeln des Druck in den Druckbehältern 6 in Energie, insbesondere elektrische Energie, ausgebildet. Der Generator 18 und die Kompressoren 20 sind elektrisch mit den vier Solarzelle 4 verbunden. Die elektrische Verbindung wird über Kabel 25 hergestellt.

Die Kompressoren 20 und der Generator 18 sind in einer isolierten Kammer 22 angeordnet.

Das System umfasst drei Kompressoren 20, wobei die Kompressoren 20 unterschiedliche Leistungen aufweisen.

Das System umfasst einen Wechselrichter 24, wobei der Wechselrichter 24 mit den vier Solarzellen 4 verbunden ist.

Das System umfasst vier Solarmodule 2, wobei die Druckbehälter 6 über mindestens ein Verbindungsstück 26 miteinander fluidisch verbunden sind .Die vier Solarzellen 4 sind miteinander elektrisch verbunden. Das Verbindungsstück 26 ist ein Druckluftschlauch 26.

## Patentansprüche

1. Solarmodul (2) zur Gewinnung und Speicherung von Energie,
wobei das Solarmodul (2) mindestens eine Solarzelle (4) und einen Druckbehälter (6) für Luft umfasst,
wobei die mindestens eine Solarzelle (4) auf dem Druckbehälter (6) angeordnet ist,
wobei der Druckbehälter (6) ein Verbindungselement (8), bevorzugt einen Druckluftanschluss (8), besonders bevorzugt eine Druckluftschnellkupplung (8), umfasst.

2. Solarmodul (2) nach Anspruch 1,
**dadurch gekennzeichnet, dass**
der Druckbehälter (6) einen Kunststoff und/oder Aluminium umfasst oder der Druckbehälter (6) aus Kunststoff und/oder Aluminium besteht.

3. Solarmodul (2) nach Anspruch 1 oder 2,
**dadurch gekennzeichnet, dass**
die mindestens eine Solarzelle (4) flexibel ist,
wobei die mindestens eine Solarzelle (4) insbesondere eine Solarfolie (4) ist,
wobei insbesondere die mindestens eine Solarzelle (4) stoffschlüssig mit dem Druckluftbehälter (6) verbunden ist.

4. Solarmodul (2) nach einem der vorhergehenden Ansprüche,
**dadurch gekennzeichnet, dass**
das Solarmodul (2) eine Drucküberwachung (10) umfasst,
wobei die Drucküberwachung (10) zum Überwachen des Drucks in dem Druckbehälter (6) ausgebildet ist.

5. Solarmodul (2) nach einem der vorhergehenden Ansprüche,
**dadurch gekennzeichnet, dass**
das Verbindungselement (8) seitlich an dem Druckbehälter (6) angeordnet ist.

6. Solarmodul (2) nach einem der vorhergehenden Ansprüche,
**dadurch gekennzeichnet, dass**
der Druckbehälter (6) ein Kondensatventil (12) umfasst,
wobei insbesondere der Druckbehälter (6) einen Sensor (14) zum Messen von Kondensatwasser umfasst,
wobei insbesondere der Sensor (14) zum Messen von Kondensatwasser zum Aktivieren des Kondensatventil (12) ausgebildet ist.

7. Solarmodul (2) nach einem der vorhergehenden Ansprüche,
**dadurch gekennzeichnet, dass**
die mindestens eine Solarzelle (4) einen Winkel (α) von 3°-30°, bevorzugt von 5°-15°, zur Horizontalen aufweist.

8. Solarmodul (2) nach einem der vorhergehenden Ansprüche,
**dadurch gekennzeichnet, dass**
das Solarmodul (2) mindestens ein Aufstellelement (16) umfasst,
wobei das mindestens eine Aufstellelement (16) an der Unterseite des Druckbehälters (6) angeordnet ist,
wobei insbesondere das mindestens eine Aufstellelement (16) Bautenschutzmatte umfasst oder aus einer Bautenschutzmatte besteht.

9. System umfassend ein Solarmodul (2) nach einem der Ansprüche 1 bis 8, einen Generator (18) und mindestens einen Kompressor (20),
**dadurch gekennzeichnet, dass**
der Druckbehälter (6) mit dem mindestens einen Kompressor (20) und dem Generator (18) fluidisch verbunden ist,
wobei der mindestens eine Kompressor (20) zum Erhöhen des Drucks in dem Druckbehälter (6) ausgebildet ist,
wobei der Generator (18) zum Umwandeln des Druck in dem Druckbehälter (6) in Energie, insbesondere elektrische Energie, ausgebildet ist,
wobei der Generator (18) und/oder der mindestens eine Kompressor (20) elektrisch mit der mindestens einen Solarzelle (4) verbunden sind.

10. System nach Anspruch 9,
**dadurch gekennzeichnet, dass**
der mindestens eine Kompressor (20) und/oder der Generator (18) in einer isolierten Kammer (22) angeordnet sind.

11. System nach Anspruch 9 oder 10,
**dadurch gekennzeichnet, dass**
das System mehrere Kompressoren (20) umfasst,
wobei die mehreren Kompressoren (20) unterschiedliche Leistungen aufweisen.

12. System nach einem der Ansprüche 9 bis 11,
**dadurch gekennzeichnet, dass**
das System mindestens einen Wechselrichter (24) umfasst,
wobei insbesondere der mindestens eine Wechselrichter (24) mit mindestens vier Solarzellen (4) verbunden ist.

13. System nach einem der Ansprüche 9 bis 12,
**dadurch gekennzeichnet, dass**
das System mehrere Solarmodule (2) umfasst,
wobei die mehreren Druckbehälter (6), insbesondere über mindestens ein Verbindungsstück (26), miteinander fluidisch verbunden sind,
wobei die mehreren Solarzellen (4) miteinander elektrisch verbunden sind.

14. Verfahren zum Aufbau eines Systems nach einem der Ansprüche 9 bis 12,
bei dem das mindestens eine Solarmodul (2) aufgestellt wird,
bei dem der Druckbehälter (6) mit dem mindestens einen Kompressor (20) und dem mindestens einen Generator (18), insbesondere über mindestens ein Verbindungsstück (26), fluidisch verbunden wird,
bei dem die mindestens eine Solarzelle (4) mit dem mindestens einen Kompressor (20) und dem Generator (18) elektrisch verbunden wird.

15. Verfahren zum Betreiben eines Systems nach einem der Ansprüche 9 bis 12,
- bei dem mit der mindestens einen Solarzelle (4) elektrische Energie erzeugt wird,
- bei dem die elektrische Energie, insbesondere nur die überschüssige, elektrische Energie dem mindestens einen Kompressor (20) zugeführt wird,
- bei dem mit dem mindestens einen Kompressor (20) der Druck in dem Druckbehälter (6) erhöht wird, und
- bei dem vorzugsweise mit dem Generator (18) der Druck in dem Druckbehälter (6) in, insbesondere elektrische, Energie umgewandelt wird.
